# FASCICULE DE BREVET EUROPEEN

(11) **EP 3 900 911 B1**
(45) Date de publication et mention de la délivrance du brevet: **20.05.2026**
(21) Numéro de dépôt: 21165481.9
(22) Date de dépôt: 29.03.2021
(51) Int. Cl.: B29C 49/00, B29C 49/64, B29C 35/08, B29K 509/02, B29K 23/00, B29K 25/00

(54) **PREFORME ET RECIPIENT A TRANSMITTANCES VARIABLES**
VORFORMLING UND BEHÄLTER MIT VARIABLEN DURCHLÄSSIGKEITEN
PREFORM AND CONTAINER WITH VARIABLE TRANSMITTANCE

(30) Priorité: 22.04.2020 FR 2003996
(43) Date de publication de la demande: 27.10.2021
(73) Titulaire: Sidel Participations, 76930 Octeville-sur-Mer (FR)
(72) Inventeur: FEUILLOLEY, Guy, 76930 Octeville-sur-Mer (FR); BOUTROY, Naïma, 76930 Octeville-sur-Mer (FR)
(74) Mandataire: Sidel Group

(56) Documents cités:
- WO-A1-2006/056673
- WO-A1-2019/133713

## Description

Le domaine de l'invention est celui de la conception et de la fabrication de récipients en plastique.

L'invention concerne plus particulièrement la fabrication de récipients destinés à contenir des produits devant être protégés de la lumière, et étant fabriqués par soufflage ou étirage-soufflage d'une préforme.

Classiquement, une préforme comprend un corps creux, généralement cylindrique de révolution, un col qui présente un buvant, et un fond qui ferme le corps à l'opposé du col.

Pour réaliser une préforme, une matière plastique constitutive de la préforme est injectée à l'état fluide et à une pression élevée dans un moule d'injection.

Une technique classique de fabrication d'un récipient à partir d'une préforme consiste à chauffer la préforme à l'intérieur d'un four, puis à former le récipient dans un moule de soufflage, que nous appellerons simplement « moule ».

Le formage du récipient consiste à introduire la préforme chauffée dans le moule qui présente une paroi définissant une cavité à l'empreinte du récipient, et à injecter dans la préforme, par une tuyère, un fluide tel qu'un gaz sous pression ou un liquide pour plaquer la matière de la préforme contre la paroi du moule.

Pour chauffer correctement les préformes, il est nécessaire de les chauffer dans une plage de température de process qui est supérieure à la température de transition vitreuse de la matière (environ 70 degrés Celsius dans le cas du PET), mais toutefois inférieure à la température de cristallisation sphérolitique de cette matière et bien inférieure à la température de fusion.

Dans l'industrie, il est classiquement utilisé des fours équipés de lampes halogènes qui sont particulièrement puissantes et rayonnent sur l'ensemble du spectre lumineux.

Ce type de four présente un rendement peu élevé vis-à-vis de la puissance émise par rapport à la chauffe réelle de la préforme.

En effet, un matériau tel que le PET est particulièrement isolant, et absorbe de manière variable un rayonnement électromagnétique émis dans le spectre infrarouge. De plus, une préforme peut présenter une paroi avec une épaisseur pouvant atteindre 5 mm. En conséquence, suite à une chauffe donnée une différence de température peut être observée entre la peau externe et la peau interne de la paroi du corps de la préforme.

Cette différence de température est compensée par la présence d'une ventilation forcée dans les fours. Cette ventilation permet de refroidir la peau externe pour éviter qu'elle n'atteigne la température de cristallisation sphérolitique, tandis que la chaleur se diffuse dans l'épaisseur de la paroi du corps de la préforme.

Il existe également des fours équipés de diodes laser. Cette technologie vise à améliorer le rendement des fours tout en permettant de réduire le temps de chauffe d'une préforme.

La technique de chauffe par laser est notamment décrite dans la demande internationale publiée sous le numéro WO 2006/056673, et un perfectionnement de cette technique est décrit dans le brevet européen publié sous le numéro EP 2 125 316.

Au sein d'une unité de fabrication de récipients et à partir de préformes basiques, par exemple destinées à être utilisées pour former des récipients transparents destinés à contenir de l'eau, il est possible d'obtenir des cadences de production de 2500 à 2700 bouteilles par heure et par moule. Le document WO 2019/133713 A1 décrit une préforme destinée au formage de récipients et une bouteille par soufflage ou étirage soufflage, la préforme étant en matière plastique intégrant au moins un additif conférant à la matière plastique la propriété de filtrer au moins partiellement le spectre visible de la lumière, la préforme comprenant une paroi formant un corps creux, où ledit ou lesdits additifs confèrent à la matière plastique la propriété de permettre au moins partiellement le passage de la lumière dans le spectre infrarouge, et en ce que la paroi présente une transmittance dans le spectre visible, sensiblement égale à 0% dans la gamme de longueur d'onde de 350 nm à 520 nm.

En fonction de la destination des récipients, ces derniers doivent présenter des caractéristiques précises pouvant être obtenues grâce à la conception des préformes.

Plus particulièrement, certains produits contenus dans des récipients peuvent être altérés sous l'action de la lumière. C'est le cas en particulier du lait, dont le goût se transforme sous l'effet de la lumière.

Ce goût altéré se développe en deux sensations :
- un goût « activé » (goût de chou, goût de cuit ou goût de champignon) qui apparaît très rapidement ;
- un goût d'oxydation (goût de carton, de papier, de métal, huileux) qui se développe plus lentement.

Pour le lait, il est notamment connu que la lumière, dans la gamme de longueur d'onde de 350 nm à 520 nm, entraîne une dégradation de la riboflavine ce qui est une des causes du goût « activé ».

Pour permettre la conservation du lait dans des récipients plastiques, pendant une durée relativement importante et tout en évitant l'altération décrite ci-dessus, il est classiquement utilisé des récipients plastiques présentant la capacité d'empêcher la lumière de traverser leur paroi.

Ces récipients, souvent de couleur blanche, sont obtenus à partir de préformes en matériau plastique intégrant un ou plusieurs additifs destinés à créer cette capacité de « barrière lumière ».

Selon un exemple bien connu, pour les produits laitiers, il est produit des bouteilles à partir de préformes en résine PET additionnée de dioxyde de titane (TiO₂). Le dioxyde de titane apporte la couleur blanche et la fonctionnalité de barrière lumière dans le visible et permet d'empêcher la dégradation de la riboflavine (vitamine B2).

Pour d'autres applications de bouteilles, le dioxyde de titane est également rajouté pour obtenir une opacité visuelle, non fonctionnelle.

Ce type d'additif a néanmoins une incidence négative sur la fabrication même des récipients.

En effet, ces additifs, en plus d'avoir un effet « barrière lumière », confère également au récipient une capacité à bloquer les rayonnements électromagnétiques dans le domaine des infrarouges.

De ce fait, les rayonnements produits dans les fours de chauffe destinés à chauffer les préformes ne peuvent pas chauffer ces dernières de manière efficiente.

Plus précisément, ces préformes présentent alors une transmittance essentiellement nulle vis-à-vis des rayonnements électromagnétiques dans le domaine du visible et des infrarouges. Les rayonnements infrarouges incidents pénètrent dans une épaisseur très réduite du matériau contenant une telle barrière lumière et sont essentiellement réfléchis. De ce fait, l'absorbance à ces rayonnements est particulièrement importante sur la peau externe des préformes.

Cela entraîne, lors de la chauffe, une montée en température importante de la peau externe des préformes, directement exposée aux rayonnements, tandis que la peau interne est chauffée, non pas directement mais uniquement, ou essentiellement, par conduction thermique qui diffuse lentement la température au travers de la paroi des préformes depuis la peau externe.

Une conséquence négative réside dans le fait que cette chauffe risque d'entraîner un dépassement de la plage de température de process, pouvant aller jusqu'au pic de fusion, au niveau de la peau externe tandis que la peau interne n'a toujours pas atteint la température de transition vitreuse, dégradant l'aspect (bullage notamment) et les caractéristiques structurelles de la préforme.

Le chauffage de telles préformes doit ainsi être réalisé d'une manière spécifique, c'est-à-dire que, par exemple, le temps de chauffe doit être augmenté, ou les cadences de production des bouteilles doivent être diminuées.

Cela entraîne pour ce type de préformes dites préformes opaques, une diminution des cadences de production par rapport aux cadences de production des préformes dites claires. A titre d'exemple, pour des préformes opaques présentant une paroi avec une épaisseur supérieure à 2,5 mm, les cadences des machines ne peuvent atteindre que 1 800 bouteilles par heure par moule.

Il peut également être remarqué que dans les fours halogènes, la ventilation forcée est réglée à son maximum pour permettre le refroidissement de la peau externe des préformes opaques, ce qui provoque une dépense énergétique accrue.

Vis-à-vis de la chauffe laser, qui a un temps de chauffe court et qui, tel que décrit dans les inventions de la demanderesse citées précédemment, ne comprend pas de système de ventilation du corps de la préforme à l'intérieur des fours, il est impossible de chauffer ce type de préforme opaque avec cette technologie.

En effet, le rayonnement de chauffage des fours laser est principalement réfléchi par les préformes PET dont la barrière lumière est assurée par du TiO₂. Une faible proportion peut être directement absorbé par la peau externe des préformes et l'absence de ventilation ne permet pas une diffusion suffisante de la température au travers de la paroi des préformes avant que la peau externe n'ait atteint la température de fusion du matériau plastique et dégrade la paroi des préformes.

Notamment, il se présente alors une surchauffe de la préforme qui engendre un bullage, une cristallisation sphérolitique et/ou un aspect granité en surface de la préforme.

L'invention a notamment pour objectif de résoudre les inconvénients de l'art antérieur.

Plus précisément, l'invention a pour objectif de proposer une préforme opaque, destinée à contenir du lait, mieux adaptée aux procédés de fabrication de récipients que les préformes opaques selon l'art antérieur.

L'invention a aussi pour objectif de fournir une telle préforme qui permet de limiter la consommation énergétique liée à la production des récipients à partir de ces préformes.

L'invention a également pour objectif de fournir une telle préforme, ainsi que le récipient correspondant, qui permette la production du récipient à une cadence similaire à celle atteinte pour produire des récipients transparents classiques.

L'invention a encore pour objectif de fournir une telle préforme qui permette de former des récipients adaptés à la conservation du lait et qui puisse être chauffés, préalablement au formage, au sein d'un four laser.

Ces objectifs, ainsi que d'autres qui apparaitront par la suite, sont atteints grâce à l'invention qui a pour objet une préforme destinée au formage de récipients selon la revendication 1.

Grâce aux préformes selon l'invention, il est possible de fabriquer des récipients adaptés à la conservation du lait, et à des cadences de production susceptibles d'atteindre celles obtenues avec des préformes destinées à fabriquer des récipients transparents classiques.

Plus précisément, grâce aux propriétés de la paroi de la préforme, cette préforme chauffe plus rapidement que ce que permettent les préformes selon l'art antérieur qui intègrent du dioxyde de titane en forte concentration dans leur composition, par exemple 10% de TiO₂.

Il a été constaté que, avec une transmittance seuil supérieure ou égale à 5 %, il est possible de chauffer une préforme selon l'invention, là où une préforme opaque selon l'art antérieur serait brulée, ou nécessiterait un temps de pause entre deux chauffes pour laisser diffuser la température au travers de la paroi de la préforme.

De plus, il a été également constaté de manière surprenante qu'avec une transmittance plafond à 70 % ou en deçà de 70 %, le gradient de température au sein de la paroi de la préforme était plus faible qu'attendu. Notamment, le phénomène de surchauffe de la peau externe par rapport à la peau interne apparaît atténué, les calories du rayonnement de chauffage se distribuant majoritairement lors de la traversée de la paroi.

En effet, grâce à la transmittance comprise dans la gamme revendiquée, un rayonnement électromagnétique, à au moins une longueur d'ondes comprise dans la gamme de 700 nanomètres à 2 250 nanomètres, permet de distribuer dans toute l'épaisseur de la paroi de la préforme les calories résultantes du chauffage.

Ainsi, bien que présentant une propriété de « barrière » à la lumière visible dans le spectre de 350 nanomètres à 520 nanomètres, la préforme peut être chauffée dans un four à une vitesse supérieure à celle atteinte avec des préformes opaques selon l'art antérieur, et susceptible d'atteindre la vitesse de chauffe des préformes transparente classique.

De plus, la préforme selon l'invention présente la capacité à être chauffée avec un four laser qui serait configuré pour émettre un rayonnement électromagnétique de chauffage à la longueur d'ondes où la préforme présente sa transmittance comprise dans la gamme revendiquée.

Selon une caractéristique avantageuse, la transmittance dans le spectre infrarouge est comprise dans la gamme de transmittance aux longueurs d'ondes comprises dans la gamme 750 nm à 1400 nm, et préférentiellement dans la gamme de 950 nm à 1400 nm.

Grâce à une telle transmittance dans le spectre infrarouge, la préforme est particulièrement adaptée à être chauffée dans un four halogène. En effet, les fours halogènes rayonnent le plus sur ces gammes de longueurs d'ondes décrites.

Selon une solution préférée, la transmittance dans le spectre infrarouge est comprise dans la gamme de transmittance à une longueur d'onde ou dans un spectre de longueurs d'ondes compris dans l'une des gammes suivantes :
- 1110 - 1160 nm ;
- 1390 - 1450 nm ;
- 1610 - 1650 nm ;
- 1675 - 1700 nm ;
- 1880 - 2100 nm ;
- 2170 - 2230 nm.

Ces longueurs d'ondes ou ces spectres de longueurs d'ondes correspondent à des spectres de longueurs d'ondes ou des longueurs d'ondes typiques des fours laser.

Dans ce cas, avantageusement, la transmittance dans le spectre infrarouge est comprise dans la gamme de transmittance à une longueur d'onde de 1130 nm.

Une telle transmittance dans le spectre infrarouge est particulièrement avantageuse en ce qu'elle permet un chauffage optimal de la préforme par le biais d'un four laser.

Selon une caractéristique avantageuse, la transmittance seuil est égale à 8%, et préférentiellement égale à 10%.

Grâce à une transmittance seuil égale à 8 %, la préforme, présentant par exemple une paroi très fine, peut être convenablement chauffée.

Avec une transmittance seuil égale à 10 %, la majorité des préformes habituelles peuvent être chauffées convenablement.

Selon une autre caractéristique avantageuse, la transmittance plafond est égale à 50%, et préférentiellement égale à 20%.

Avec une transmittance plafond égale à 50 %, les réglages des fours halogènes existants n'ont pas besoin d'être adaptés pour permettre une bonne chauffe des préformes selon l'invention.

Notamment, les fours halogènes préalablement configurés pour des préformes transparentes classiques peuvent également être utilisés pour les préformes selon l'invention. En d'autres termes, la cadence de production de récipient à partir de la préforme selon l'invention peut atteindre celle des préformes transparentes classiques.

Avec une transmittance égale à 20 %, la préforme peut être chauffée de manière optimale dans un four. Plus précisément, le rayonnement de chauffage est alors absorbé de telle manière que la peau interne de la paroi tend à présenter une température plus proche de la peau externe. Ceci est particulièrement avantageux du fait que, entre la peau interne et la peau externe, c'est la peau interne d'une préforme qui s'étend le plus lors du formage.

Selon une caractéristique avantageuse, la matière plastique intègre également au moins un colorant.

Un tel colorant peut avantageusement présenter un spectre de transmittance qui varie le long du spectre. Bien entendu, ce colorant peut présenter une ou plusieurs zones spectrales de transmittance plus élevé dans le spectre visible faisant apparaître une couleur visible. Le colorant peut également présenter des zones spectrales de moindre transmittance, sans toutefois couper la transmission du rayonnement dans le spectre infrarouge.

Préférentiellement, la paroi présente une épaisseur compris dans la gamme de 1 mm à 5 mm, et préférentiellement dans la gamme de 2 mm à 3,5 mm.

Avantageusement, la préforme est en matériau comprenant une matrice PET et des additifs.

Avantageusement, la matière plastique intègre un ou plusieurs d'additifs formant une barrière à un rayonnement inférieur à 350nm.

Selon une caractéristique préférée, la transmittance mesurée sur une paroi du récipient à laquelle est destinée ladite préforme est inférieure à 5% dans la gamme de longueur d'onde de 350 nm à 520 nm. Il en résulte que la transmittance de la paroi de la préforme dans le spectre visible est considérée comme sensiblement égale à 0%.

Une transmittance sensiblement égale à 0 % correspond notamment à une limite de sensibilité d'un matériel de mesure de la transmittance.

En effet, la transmittance mesurée sur une préforme correspond à une mesure sur une paroi présentant une épaisseur variant de 1 mm jusqu'à 5 mm, alors que la transmittance mesurée sur un récipient correspond à une mesure réalisée sur une paroi présentant une épaisseur environ égale à 0,15 mm.

Dans ce cas, avantageusement, la transmittance mesurée sur une paroi dudit récipient issu de l'étirage soufflage de ladite préforme est inférieure à 0,5% dans la gamme de longueur d'onde de 350 nm à 520 nm.

De cette manière, la lumière ne peut pas dégrader la riboflavine au travers de la paroi du récipient formé à partir d'une préforme selon l'invention.

L'invention a également pour objet un récipient en matière plastique formé par soufflage ou étirage-soufflage d'une préforme telle que décrite précédemment, le récipient comprenant une paroi, caractérisé en ce que la paroi du récipient présente, selon un rayonnement électromagnétique émis perpendiculairement à ladite paroi, une transmittance, dite transmittance du récipient, inférieure à 5% dans la gamme de longueur d'onde de 350 nm à 520 nm.

Le récipient obtenu à partir d'une préforme selon l'invention précédemment décrite présente une transmittance du récipient autorisant une bonne conservation de lait qui serait stocké dans le récipient.

Plus précisément, la paroi du récipient présente alors une capacité à filtrer de manière particulièrement importante le spectre lumineux susceptible de dégrader la riboflavine.

Dans ce cas, préférentiellement, la transmittance du récipient est inférieure à 0,5% dans la gamme de longueur d'onde de 350 nm à 520 nm.

Un tel récipient filtre alors d'une manière plus importante le spectre lumineux dans la gamme de longueurs d'ondes correspondant aux longueurs d'ondes susceptibles de dégrader la riboflavine.

Le récipient est alors particulièrement adapté à la conservation du lait.

L'invention a encore pour objet un procédé de fabrication d'un récipient en matière plastique, comprenant successivement :
- une étape de chauffe d'une préforme, consistant à émettre en direction de la préforme un rayonnement de chauffage constitué d'au moins un rayonnement électromagnétique dans un spectre infrarouge à au moins une longueur d'onde comprise dans la gamme de 700 nm à 2250 nm ;
- une étape de formage d'un récipient à partir de la préforme ;

caractérisé en ce qu'il comprend préalablement à l'étape de chauffe, une étape de fabrication de la préforme en matière plastique intégrant au moins un additif conférant à la matière plastique les propriétés de filtrer au moins partiellement le spectre visible de la lumière, et de permettre au moins partiellement le passage de la lumière dans le spectre infrarouge,
dans lequel :
   - la préforme comprend une paroi formant un corps creux, ladite paroi présentant pour le rayonnement de chauffage, et selon un rayonnement électromagnétique émis perpendiculairement à ladite paroi, une transmittance comprise dans une gamme de transmittance s'étendant de 5% à 70% ;
   - une paroi du récipient présente, dans l'ensemble du spectre lumineux compris dans la gamme de 350 nm à 520 nm, une transmittance inférieure à 5%, et préférentiellement inférieure à 0,5%.

Le procédé selon l'invention permet d'obtenir un récipient adapté à la conservation du lait avec des cadences de production bien plus importantes que ce qui est permis par l'art antérieur, et notamment des cadences de production qui peuvent se rapprocher de celles des récipients transparents classiques.

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
[fig.1] la figure 1 est une représentation schématique d'un procédé de fabrication d'un récipient à partir d'une préforme, selon l'invention.
[fig.2] la figure 2 est un graphique illustrant la transmittance d'une préforme selon l'invention, et la transmittance d'une préforme transparente classique, mises en relation avec l'irradiance d'un four halogène et d'un four laser.

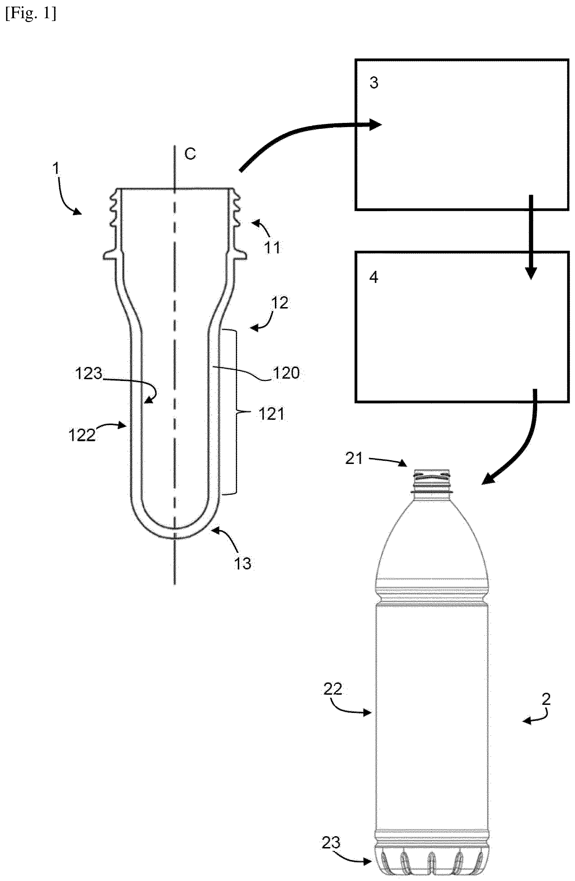

En référence à la figure 1, un procédé de fabrication selon l'invention d'un récipient 2 en matière plastique est représenté.

Ce procédé, décrit plus en détail par la suite, permet de fabriquer par soufflage ou étirage-soufflage des récipients 2 à partir d'une préforme 1 selon l'invention.

La préforme 1 comprend :
- un col 11
- un corps 12 ;
- un fond 13.

Le corps 12 est symétrique de révolution autour d'un axe central C, et présente une portion 121 cylindrique de révolution.

Ce corps 12 est formé par une paroi 120.

La paroi 120 présente une épaisseur comprise dans la gamme de 1 mm à 5 mm, et préférentiellement dans la gamme de 2 mm à 3,5 mm.

Cette paroi 120 présente une peau externe 122 et une peau interne 123.

Le fond 13 est situé à l'une des extrémités du corps 12 et ferme ce dernier.

Le col 11 s'étend dans le prolongement du corps 2, à une autre extrémité du corps 12.

Ce col 11 est ouvert et forme un buvant d'un récipient 2 final formé à partir de la préforme 1.

Le col 11 présente une forme finale qui est destinée à être conservée sur le récipient 2 formé à partir de la préforme 1.

La préforme est réalisée en matière plastique, par exemple du polyéthylène té-réphtalate (PET). En d'autres termes, la préforme intègre majoritairement du PET.

Le récipient 2 comprend quant à lui :
- un col 21 ;
- un corps 22 ;
- un fond 23.

Par analogie, le corps 12 de la préforme 1 devient le corps 22 du récipient 2, le col 11 de la préforme 1 demeure inchangé au cours du processus de formage du récipient 2, et le fond 13 de la préforme 1 devient le fond 23 du récipient 2.

Pour fabriquer le récipient 2 à partir de la préforme 1, le procédé comprend successivement :
- une étape de fabrication de la préforme 1 en matière plastique
- une étape de chauffe de la préforme 1 ;
- une étape de formage du récipient 2 à partir de la préforme 1.

En référence à la figure 1, l'étape de chauffe est réalisée au sein d'une unité 3 de chauffe, et l'étape de formage est réalisée au sein d'une unité 4 de formage.

L'étape de chauffe consiste à émettre en direction de la préforme un rayonnement de chauffage.

Cette étape de chauffe a pour objectif de chauffer le matériau plastique de la préforme 1 jusqu'à ce qu'il dépasse sa température de transition vitreuse, sans toutefois atteindre sa température de cristallisation sphérolitique.

Tel que cela est détaillé par la suite, l'étape de chauffe peut être réalisée soit par un four équipé de lampes halogènes dit « four halogène », soit par un four équipé de diodes lasers dit « four laser ».

L'étape de formage est réalisée, de manière connue, soit par soufflage, soit par étirage-soufflage.

Selon le présent mode de réalisation, la matière plastique de la préforme 1 intègre en outre au moins un additif, désigné par l'expression « additif formant partiellement une barrière à la lumière », conférant à la matière plastique :
- la propriété de filtrer au moins partiellement le spectre visible de la lumière ;
- la propriété de permettre au moins partiellement le passage de la lumière dans le spectre infrarouge.

Selon un autre mode de réalisation envisageable, la matière plastique peut intégrer un ou plusieurs d'additifs formant une barrière à un rayonnement inférieur à 350nm., par exemple des additifs qui bloquent les rayonnements UV, notamment jusqu' au visible

De tels additifs sont connus, et par exemple décrits dans les demandes de brevets publiées sous les numéros WO 2019/133713 A1 et WO 2017/095931 A1.

La composition de la préforme est réalisée de manière à ce que la préforme présente une transmittance présentant des variations dans le spectre lumineux.

Plus précisément, la transmittance est mesurée pour la paroi 120 du corps 12 de la préforme 1.

Plus spécifiquement, la transmittance est mesurée pour la paroi 120 au niveau de la portion 121 cylindrique du corps 12.

La transmittance, en un point donné de la paroi 120 selon un spectre donné de rayonnements électromagnétiques, est le rapport entre l'énergie moyenne pondérée sur tout le spectre de rayonnements traversant audit point la paroi donnée sur toutes les directions d'émergence, divisée par la moyenne pondérée sur tout le spectre du rayonnement incident perpendiculairement à la paroi.

La transmittance est mesurée de la manière suivante :

Un spectrophotomètre Perkin Elmer Lambda 950 est utilisé. Il comprend une sphère d'intégration de 60 mm de diamètre.

Pour assurer une stabilité maximale et des résultats corrects, les prérequis suivant doivent être respectés lors de l'installation du dispositif de mesure :
- une base ferme non soumise aux vibrations ;
- un espace suffisant autour et en dessous de l'appareil pour que l'air circule convenablement ;
- une température constante comprise entre 15°C et 35°C ;
- une humidité relative constante comprise entre 20% et 80% ;
- une atmosphère exempte de poussière et d'émanations corrosives ;
- le dispositif de mesure doit être protégé de la lumière du soleil ; un éclairage à lumière diffuse est recommandé.

Pour la mesure d'une préforme 1, une préparation préalable est nécessaire. En effet la transmittance doit se mesurer à travers une seule paroi 120 de préforme 1. Pour cela il faut préalablement couper le corps de celle-ci dans le sens de la longueur, c'est-à-dire parallèlement à l'axe C, à l'aide d'une scie ou de tout autre moyen n'endommageant pas les surfaces de l'échantillon, pour n'en garder qu'une moitié.

La préforme 1 doit être maintenue correctement contre le port de transmittance. De ce fait, il faut ajouter un outillage installé devant le port de transmittance de façon à maintenir la préforme centrée sur le port et de sorte que son axe de révolution soit aligné avec le plus large coté du faisceau de la source afin de minimiser l'effet de forme lié à la courbure.

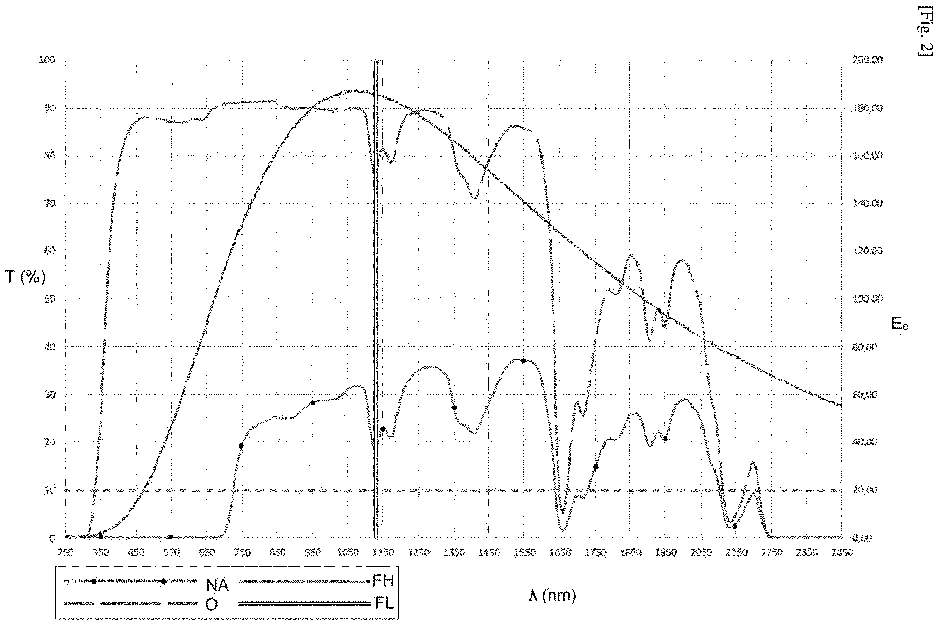

La figure 2 représente l'évolution de la transmittance T en fonction de la longueur d'onde λ du spectre lumineux, pour :
- une préforme transparente classique selon l'art antérieur, par le biais de la courbe « O » ;
- une préforme selon l'invention, par le biais de la courbe « NA ».

La figure 2 rapporte également à ces courbes celles de l'irradiance Eₑ en fonction de la longueur d'onde λ pour un four halogène « FH », et pour un four laser « FL ».

Tel que cela peut être observé sur la figure 2, une préforme transparente classique présente une transmittance supérieure à 20% à 350 nm, et en moyenne supérieure à 80% de 450 nm à 1550nm.

Ce type de préforme produit des récipients 2 qui ne sont pas adaptés à la conservation de tous types de produits.

Par exemple, ce type de préforme ne permet pas de produire des récipients adaptés à la conservation du lait du fait que les récipients laissent par la suite passer la lumière au travers de leur paroi dans le spectre visible, et notamment de 350 nm à 520nm.

Selon le principe de l'invention, et tel que cela est observable sur la figure 2, la paroi 120 de la préforme 1 présente, selon un rayonnement électromagnétique émis perpendiculairement à la paroi 120, une transmittance :
- dans le spectre visible, sensiblement égale à 0% dans la gamme de longueur d'onde de 350 nm à 520 nm ;
- dans le spectre infrarouge, comprise dans une gamme de transmittance s'étendant entre une transmittance seuil et une transmittance plafond, à au moins une longueur d'onde comprise dans la gamme de 700 nm à 2250 nm.

Par sensiblement égale à 0%, il est entendu que, selon le protocole de mesure, la transmittance mesurée atteint le seuil de détection du dispositif de mesure employé dans ce protocole. Cette transmittance est notamment égale à une valeur arrondie de 0%.

Tel que cela est détaillé par la suite, cette transmittance de la préforme 1 dans le spectre visible permet au récipient 2 d'avoir une capacité à éviter la dégradation de la riboflavine du lait qui serait stocké dans le récipient 2.

La transmittance seuil est égale à 5%, préférentiellement à 8% et encore plus préférentiellement à 10%

A partir d'une transmittance seuil à 5%, les essais ont démontré la possibilité de chauffer une préforme 1 à une vitesse satisfaisante, et ce notamment pour des préforme avec des parois considérées comme « très fines » (c'est-à-dire comme présentant approximativement une épaisseur de 1 mm à 1,5 mm).

En effet, avec cette transmittance seuil suffisamment de puissance lumineuse arrive à traverser la paroi 120 de la préforme 1 et l'absorption de ce rayonnement traversant est suffisamment répartie au travers de l'épaisseur de la paroi 120. Il se produit ainsi une élévation de température suffisamment régulière dans l'épaisseur de la paroi 120, et ceci dès la première traversée de l'extérieur vers l'intérieur de la paroi 120 par le rayonnement.

Dès une transmittance seuil à 8%, les essais ont démontré la possibilité de chauffer suffisamment rapidement une préforme 1 avec une paroi 120 considérée comme « fine » (c'est-à-dire comme approximativement une épaisseur de 1,5 mm à 2 mm).

Enfin, avec une transmittance seuil de 10%, toute préforme 1 selon l'invention avec une épaisseur supérieure à 2 mm, peut être chauffée à une vitesse sensiblement comparable à celle des préformes transparentes classiques.

La transmittance plafond est quant à elle égale à 70%, préférentiellement à 50% et encore plus préférentiellement à 20%.

Il a été constaté par le biais d'essais qu'une transmittance plafond égale à 70% permet d'éviter que la préforme 1 soit « trop » transparente au rayonnement électromagnétique utilisé pour la chauffer.

Les préformes 1 étant des corps creux, l'homogénéité de la chauffe le long de l'épaisseur de leur paroi est aussi dû, dans le cas de préformes très transparentes au rayonnement, à une traversée de leur paroi de l'extérieur vers l'intérieur, puis de l'intérieur vers l'extérieur, puis éventuellement grâce à des réflecteurs, par plusieurs traversée extérieur-intérieur-extérieur.

Avec la transmittance plafond égale à 70%, l'homogénéité de la chauffe le long de l'épaisseur de la paroi épaisse de la préforme est obtenue avec un nombre restreint de traversée complètes extérieur-intérieur-extérieur.

Cela réduit la déperdition énergétique du four dans les réflecteurs, et accélère le chauffage de la préforme.

Grâce à une transmittance plafond égale à 50%, il est possible de chauffer la préforme 1 dans un four halogène en garantissant de suffisamment chauffer au-dessus de la température de transition vitreuse la peau interne 123 de la préforme 1 sans pour autant bruler la peau externe 122.

Enfin, la transmittance plafond égale à 20% offre un compromis particulièrement avantageux en ce qu'elle permet d'atteindre de meilleures cadences de chauffage des préformes 1.

Pour rappel, pour obtenir le récipient 2 selon l'invention à partir de la préforme 1 selon l'invention, l'étape de chauffe du récipient consiste à émettre en direction de la préforme un rayonnement de chauffage.

Ce rayonnement de chauffage est constitué d'au moins un rayonnement électromagnétique dans un spectre infrarouge à au moins une longueur d'onde comprise dans la gamme s'étendant de 700 nm à 2250 nm. Cette ou ces longueurs d'ondes du rayonnement de chauffage correspondent à la ou aux longueurs d'ondes pour lesquelles la paroi 120 de la préforme 1 présente une transmittance située dans la gamme de transmittance s'étendant entre la transmittance seuil et la transmittance plafond.

Avec une transmittance dans le spectre infrarouge dans l'une des gammes précitées, la préforme 1 est éligible à une chauffe laser. Cette chauffe laser est alors réalisée à une ou plusieurs longueurs d'ondes comprises dans la gamme s'étendant de 700 nm à 2250 nm, pour laquelle ou lesquelles la préforme 1 présente la transmittance adéquate.

Pour optimiser la chauffe de la préforme 1 dans un four laser, la transmittance de la paroi 120 dans le spectre infrarouge peut être comprise dans la gamme de transmittance à une longueur d'onde ou dans un spectre de longueurs d'ondes compris dans l'une des gammes suivantes :
- 1110 - 1160 nm ;
- 1390 - 1450 nm ;
- 1610 - 1650 nm ;
- 1675 - 1700 nm ;
- 1880 - 2100 nm ;
- 2170 - 2230 nm.

Ces gammes de longueurs d'onde ou de spectres de longueurs d'ondes sont représentatives des chauffages typiquement réalisés avec une chauffe laser.

En référence à la figure 2 et selon un mode de réalisation préféré de la préforme 1, pour sa chauffe dans un four laser, alors la transmittance dans le spectre infrarouge est comprise dans la gamme de transmittance à une longueur d'onde de 1130 nm. Il est entendu que la préforme 1 présente alors un spectre étroit de longueur d'onde englobant la longueur d'onde de 1130 nm.

Dans ce cas, l'étape de chauffe du procédé est réalisée avec un four laser qui produit un rayonnement de chauffage à 1130 nm.

Tel qu'évoqué précédemment, la préforme 1 selon l'invention peut également être chauffée dans un four halogène.

Pour optimiser la chauffe de la préforme 1 dans un four halogène, alors la transmittance de la paroi 120 dans le spectre infrarouge peut être comprise dans la gamme de transmittance, aux longueurs d'ondes comprises dans la gamme 750 nm à 1400 nm, et préférentiellement dans la gamme de 950 nm à 1400 nm.

Tel que cela est illustré par la figure 2, ces gammes de longueurs d'ondes correspondent à celles où un four halogène présente une irradiance moyenne plus importante.

Grâce à la préforme 1 selon l'invention, un récipient 2 selon l'invention peut être obtenu.

Ce récipient 2 présente des caractéristiques précises découlant de celles des préformes 1.

Plus précisément, la paroi du récipient 2 présente, selon un rayonnement électromagnétique émis perpendiculairement à ladite paroi, une transmittance, dite transmittance du récipient, inférieure à 5%, préférentiellement inférieure à 0,5%, dans la gamme de longueur d'onde de 350 nm à 520 nm.

Avec une transmittance inférieure à 5%, le récipient 2, utilisé pour contenir du lait, permet ainsi de minimiser la dégradation de la riboflavine de ce lait.

Avec une transmittance inférieure à 0,5%, le récipient 2 permet d'empêcher la dégradation de la riboflavine par un rayonnement lumineux sur la gamme de longueur d'onde de 350 à 520 nm.

Selon un mode de réalisation avantageux, la matière plastique de la préforme 1 intègre également un colorant.

Un tel colorant peut avantageusement présenter une transmittance qui varie le long du spectre lumineux.

Toutefois, le colorant sélectionné ne présente pas de longueur d'onde de coupure (par laquelle ledit le plastique équipé dudit colorant constitue une barrière) dans le spectre infrarouge, mais peut présenter une transmittance nulle hors de la gamme infra rouge.

## Revendications

1. Préforme (1) destinée au formage de récipients (2) par soufflage ou étirage soufflage, la préforme (1) étant en matière plastique intégrant au moins un additif conférant à la matière plastique la propriété de filtrer au moins partiellement le spectre visible de la lumière, la préforme (1) comprenant une paroi (120) formant un corps creux, ledit ou lesdits additifs conférant à la matière plastique la propriété de permettre au moins partiellement le passage de la lumière dans le spectre infrarouge, et la paroi (120) présente, selon un rayonnement électromagnétique émis perpendiculairement à la paroi (120), une transmittance :
- dans le spectre visible, sensiblement égale à 0% dans la gamme de longueur d'onde de 350 nm à 520 nm ; et
- dans le spectre infrarouge comprise dans une gamme de transmittance s'étendant entre une transmittance seuil et une transmittance plafond, à au moins une longueur d'onde comprise dans la gamme de 700 nm à 2250 nm, la transmittance seuil étant égale à 5% et la transmittance plafond égale à 70%.

2. Préforme (1) selon la revendication précédente, **caractérisée en ce que** la transmittance dans le spectre infrarouge est comprise dans la gamme de transmittance aux longueurs d'ondes comprises dans la gamme 750 nm à 1400 nm, et préférentiellement dans la gamme de 950 nm à 1400 nm.

3. Préforme (1) selon la revendication 1, **caractérisée en ce que** la transmittance dans le spectre infrarouge est comprise dans la gamme de transmittance à une longueur d'onde ou dans un spectre de longueurs d'ondes compris dans l'une des gammes suivantes :
- 1110 - 1160 nm ;
- 1390 - 1450 nm ;
- 1610 - 1650 nm ;
- 1675 - 1700 nm ;
- 1880 - 2100 nm ;
- 2170 - 2230 nm.

4. Préforme (1) selon la revendication 1 ou 3, **caractérisée en ce que** la transmittance dans le spectre infrarouge est comprise dans la gamme de transmittance à une longueur d'onde de 1130 nm.

5. Préforme (1) selon l'une quelconque des revendications précédentes, **caractérisée en ce que** la transmittance seuil est égale à 8%, et préférentiellement égale à 10%.

6. Préforme (1) selon l'une quelconque des revendications précédentes, **caractérisée en ce que** dans la transmittance plafond est égale à 50%, et préférentiellement égale à 20%.

7. Préforme (1) selon l'une quelconque des revendications précédentes, **caractérisée en ce que** la matière plastique intègre également au moins un colorant.

8. Préforme (1) selon l'une quelconque des revendications précédentes, **caractérisée en ce que** la paroi (120) présente une épaisseur comprise dans la gamme de 1 mm à 5 mm, et préférentiellement dans la gamme de 2 mm à 3,5 mm.

9. Préforme (1) selon l'une quelconque des revendications précédentes, **caractérisée en ce que** la transmittance mesurée sur une paroi du récipient (2) à laquelle est destinée ladite préforme (1) est inférieure à 5% dans la gamme de longueur d'onde de 350 nm à 520 nm, ce par quoi la transmittance de la paroi (120) de la préforme (1) dans le spectre visible est considérée comme sensiblement égale à 0%.

10. Préforme (1) selon la revendication précédente, **caractérisée en ce que** la transmittance mesurée sur une paroi dudit récipient (2) est inférieure à 0,5%, dans la gamme de longueur d'onde de 350 nm à 520 nm.

11. Préforme (1) selon l'une quelconque des revendications précédentes, **caractérisée en ce que** la matière plastique intègre un ou plusieurs d'additifs formant une barrière à un rayonnement inférieur à 350nm.

12. Récipient (2) en matière plastique formé par soufflage ou étirage-soufflage d'une préforme (1) selon l'une quelconque des revendications précédentes, le récipient (2) comprenant une paroi, **caractérisé en ce que** la paroi du récipient (2) présente, selon un rayonnement électromagnétique émis perpendiculairement à ladite paroi, une transmittance, dite transmittance du récipient, inférieure à 5% dans la gamme de longueur d'onde de 350 nm à 520 nm.

13. Récipient (2) selon la revendication précédente, **caractérisé en ce que** la transmittance du récipient est inférieure à 0,5% dans la gamme de longueur d'onde de 350 nm à 520 nm.

14. Procédé de fabrication d'un récipient (2) en matière plastique,
comprenant successivement :
- une étape de chauffe d'une préforme (1), consistant à émettre en direction de la préforme (1) un rayonnement de chauffage constitué d'au moins un rayonnement électromagnétique dans un spectre infrarouge à au moins une longueur d'onde comprise dans la gamme de 700 nm à 2250 nm ;
- une étape de formage d'un récipient (2) à partir de la préforme (1) ;
**caractérisé en ce qu'**il comprend préalablement à l'étape de chauffe, une étape de fabrication de la préforme (1) en matière plastique intégrant au moins un additif conférant à la matière plastique les propriétés de filtrer au moins partiellement le spectre visible de la lumière, et de permettre au moins partiellement le passage de la lumière dans le spectre infrarouge,
dans lequel :
- la préforme (1) comprend une paroi (120) formant un corps creux, ladite paroi (120) présentant pour le rayonnement de chauffage, et selon un rayonnement électromagnétique émis perpendiculairement à ladite paroi (120), une transmittance comprise dans une gamme de transmittance s'étendant de 5% à 70%
- une paroi du récipient (2) présente, dans l'ensemble du spectre lumineux compris dans la gamme de 350 nm à 520 nm, une transmittance inférieure à 5%, et préférentiellement inférieure à 0,5%.

15. Procédé selon la revendication précédente, **caractérisé en ce que** la préforme (1) est définie selon l'une quelconque des revendications 1 à 9.

16. Procédé selon l'une quelconque des revendications 14 et 15, **caractérisé en ce que** le récipient (2) est défini selon l'une quelconque des revendications 12 et 13.

## Patentansprüche

1. Vorformling (1), der zum Formen von Behältern (2) durch Blasen oder Streckblasen bestimmt ist, wobei der Vorformling (1) aus einem Kunststoff ist, der mindestens einen Zusatzstoff enthält, der dem Kunststoff die Eigenschaft verleiht, das sichtbare Spektrum des Lichts mindestens teilweise zu filtern, wobei der Vorformling (1) eine Wand (120) umfasst, die einen hohlen Körper bildet,
wobei der oder die Zusatzstoffe dem Kunststoff die Eigenschaft verleihen, den Durchgang des Lichts im Infrarotspektrum mindestens teilweise zu ermöglichen, und wobei die Wand (120) gemäß einer senkrecht zu der Wand (120) emittierten elektromagnetischen Strahlung einen Transmissionsgrad aufweist, der:
- im sichtbaren Spektrum in dem Wellenlängenbereich von 350 nm bis 520 nm im Wesentlichen 0 % beträgt; und
- im Infrarotspektrum bei mindestens einer Wellenlänge in dem Bereich von 700 nm bis 2250 nm in einem Transmissionsgradbereich liegt, der sich zwischen einer Transmissionsgraduntergrenze und einer Transmissionsgradobergrenze erstreckt, wobei die Transmissionsgraduntergrenze 5 % und die Transmissionsgradobergrenze 70 % beträgt.

2. Vorformling (1) nach dem vorhergehenden Anspruch, **dadurch gekennzeichnet, dass** der Transmissionsgrad im Infrarotspektrum bei den Wellenlängen in dem Bereich von 750 nm bis 1400 nm und vorzugsweise in dem Bereich von 950 nm bis 1400 nm in dem Transmissionsgradbereich liegt.

3. Vorformling (1) nach Anspruch 1, **dadurch gekennzeichnet, dass** der Transmissionsgrad im Infrarotspektrum bei einer Wellenlänge oder in einem Spektrum von Wellenlängen, die in einem der folgenden Bereiche enthalten sind, in dem Transmissionsgradbereich liegt:
- 1110 - 1160 nm;
- 1390 - 1450 nm;
- 1610 - 1650 nm;
- 1675 - 1700 nm;
- 1880 - 2100 nm;
- 2170 - 2230 nm.

4. Vorformling (1) nach Anspruch 1 oder 3, **dadurch gekennzeichnet, dass** der Transmissionsgrad im Infrarotspektrum bei einer Wellenlänge von 1130 nm in dem Transmissionsgradbereich liegt.

5. Vorformling (1) nach einem der vorhergehenden Ansprüche, **dadurch gekennzeichnet, dass** die Transmissionsgraduntergrenze 8 % und vorzugsweise 10 % beträgt.

6. Vorformling (1) nach einem der vorhergehenden Ansprüche, **dadurch gekennzeichnet, dass** die Transmissionsgradobergrenze 50 % und vorzugsweise 20 % beträgt.

7. Vorformling (1) nach einem der vorhergehenden Ansprüche, **dadurch gekennzeichnet, dass** der Kunststoff auch mindestens einen Farbstoff enthält.

8. Vorformling (1) nach einem der vorhergehenden Ansprüche, **dadurch gekennzeichnet, dass** die Wand (120) eine Dicke im Bereich von 1 mm bis 5 mm und vorzugsweise im Bereich von 2 mm bis 3,5 mm aufweist.

9. Vorformling (1) nach einem der vorhergehenden Ansprüche, **dadurch gekennzeichnet, dass** der Transmissionsgrad, der an einer Wand des Behälters (2) gemessen wird, für den der Vorformling (1) bestimmt ist, in dem Wellenlängenbereich von 350 nm bis 520 nm weniger als 5 % beträgt, weshalb der Transmissionsgrad der Wand (120) des Vorformlings (1) im sichtbaren Spektrum im Wesentlichen als 0 % betrachtet wird.

10. Vorformling (1) nach dem vorhergehenden Anspruch, **dadurch gekennzeichnet, dass** der an einer Wand des Behälters (2) gemessene Transmissionsgrad in dem Wellenlängenbereich von 350 nm bis 520 nm weniger als 0,5 % beträgt.

11. Vorformling (1) nach einem der vorhergehenden Ansprüche, **dadurch gekennzeichnet, dass** der Kunststoff einen oder mehrere Zusatzstoffe enthält, die eine Barriere für eine Strahlung unter 350 nm bilden.

12. Behälter (2) aus Kunststoff, der durch Blasen oder Streckblasen eines Vorformlings (1) nach einem der vorhergehenden Ansprüche gebildet wird, wobei der Behälter (2) eine Wand umfasst, **dadurch gekennzeichnet, dass** die Wand des Behälters (2) gemäß einer senkrecht zu der Wand emittierten elektromagnetischen Strahlung einen Transmissionsgrad, Transmissionsgrad des Behälters genannt, in dem Wellenlängenbereich von 350 nm bis 520 nm von weniger als 5 % aufweist.

13. Behälter (2) nach dem vorhergehenden Anspruch, **dadurch gekennzeichnet, dass** der Transmissionsgrad des Behälters in dem Wellenlängenbereich von 350 nm bis 520 nm weniger als 0,5 % beträgt.

14. Verfahren zur Herstellung eines Behälters (2) aus Kunststoff, umfassend nacheinander:
- einen Schritt des Erwärmens eines Vorformlings (1), der darin besteht, in Richtung des Vorformlings (1) eine Heizstrahlung zu emittieren, die aus mindestens einer elektromagnetischen Strahlung in einem Infrarotspektrum mit mindestens einer Wellenlänge in dem Bereich von 700 nm bis 2250 nm besteht;
- einen Schritt des Formens eines Behälters (2) aus dem Vorformling (1);
**dadurch gekennzeichnet, dass** es vor dem Schritt des Erwärmens einen Schritt des Herstellens des Vorformlings (1) aus einem Kunststoff umfasst, der mindestens einen Zusatzstoff enthält, der dem Kunststoff die Eigenschaften verleiht, das sichtbare Spektrum des Lichts mindestens teilweise zu filtern und den Durchgang des Lichts im Infrarotspektrum mindestens teilweise zu ermöglichen,
wobei:
- der Vorformling (1) eine Wand (120) umfasst, die einen hohlen Körper bildet, wobei die Wand (120) für die Heizstrahlung und gemäß einer senkrecht zu der Wand (120) emittierten elektromagnetischen Strahlung einen Transmissionsgrad in einem Transmissionsgradbereich aufweist, der sich von 5 % bis 70 % erstreckt
- eine Wand des Behälters (2) in dem gesamten Lichtspektrum im Bereich von 350 nm bis 520 nm einen Transmissionsgrad von weniger als 5 % und vorzugsweise weniger als 0,5 % aufweist.

15. Verfahren nach dem vorhergehenden Anspruch, **dadurch gekennzeichnet, dass** der Vorformling (1) nach einem der Ansprüche 1 bis 9 definiert ist.

16. Verfahren nach einem der Ansprüche 14 und 15, **dadurch gekennzeichnet, dass** der Behälter (2) nach einem der Ansprüche 12 und 13 definiert ist.

## Claims

1. Preform (1) intended for forming containers (2) by blow moulding or stretch-blow moulding, the preform (1) being made of plastic material including at least one additive giving the plastic material the property of at least partially filtering the visible light spectrum, the preform (1) comprising a wall (120) forming a hollow body,
said one or more additive(s) giving the plastic material the property of at least partially allowing the passage of light in the infrared spectrum,
and the wall (120) has, under electromagnetic radiation emitted perpendicular to the wall (120), transmittance:
- in the visible spectrum, that is substantially equal to 0% in the wavelength range of 350 nm to 520 nm; and
- in the infrared spectrum within a transmittance range extending between a threshold transmittance and an upper transmittance, for at least one wavelength within the range of 700 nm to 2250 nm, the threshold transmittance being equal to 5% and the upper transmittance being equal to 70%.

2. Preform (1) according to the preceding claim, **characterized in that** the transmittance in the infrared spectrum is within the transmittance range at wavelengths within the range of 750 nm to 1400 nm, and preferably within the range of 950 nm to 1400 nm.

3. Preform (1) according to Claim 1, **characterized in that** the transmittance in the infrared spectrum is within the transmittance range for one wavelength or within a spectrum of wavelengths within one of the following ranges:
- 1110 - 1160 nm;
- 1390 - 1450 nm;
- 1610 - 1650 nm;
- 1675 - 1700 nm;
- 1880 - 2100 nm;
- 2170 - 2230 nm.

4. Preform (1) according to Claim 1 or 3, **characterized in that** the transmittance in the infrared spectrum is within the transmittance range for a wavelength of 1130 nm.

5. Preform (1) according to any one of the preceding claims, **characterized in that** the threshold transmittance equals 8%, and preferably equals 10%.

6. Preform (1) according to any one of the preceding claims, **characterized in that** in the upper transmittance equals 50%, and preferably equals 20%.

7. Preform (1) according to any one of the preceding claims, **characterized in that** the plastic material also includes at least one colorant.

8. Preform (1) according to any one of the preceding claims, **characterized in that** the thickness of the wall (120) is within the range of 1 mm to 5 mm, and preferably within the range of 2 mm to 3.5 mm.

9. Preform (1) according to any one of the preceding claims, **characterized in that** the transmittance measured on a wall of the container (2) for which said preform (1) is intended is less than 5% within the wavelength range of 350 nm to 520 nm, whereby the transmittance of the wall (120) of the preform (1) in the visible spectrum is considered to be substantially equal to 0%.

10. Preform (1) according to the preceding claim, **characterized in that** the transmittance measured on a wall of said container (2) is less than 0.5%, within the wavelength range of 350 nm to 520 nm.

11. Preform (1) according to any one of the preceding claims, **characterized in that** the plastic material includes one or more additives forming a barrier against radiation below 350 nm.

12. Container (2) made of plastic material formed by blow moulding or stretch-blow moulding a preform (1) according to any one of the preceding claims, the container (2) comprising a wall, **characterized in that** the wall of the container (2) has, under electromagnetic radiation emitted perpendicular to said wall, transmittance, called container transmittance, of less than 5% within the wavelength range of 350 nm to 520 nm.

13. Container (2) according to the preceding claim, **characterized in that** the transmittance of the container is less than 0.5% within the wavelength range of 350 nm to 520 nm.

14. Method for manufacturing a container (2) made of plastic material, successively comprising:
- a step of heating a preform (1), involving emitting heating radiation toward the preform (1) that is at least made up of electromagnetic radiation in an infrared spectrum for at least one wavelength within the range of 700 nm to 2250 nm;
- a step of forming a container (2) from the preform (1);
**characterized in that** it comprises, prior to the heating step, a step of manufacturing the preform (1) made of plastic material including at least one additive giving the plastic material the properties of at least partially filtering the visible light spectrum, and of at least partially allowing the passage of light in the infrared spectrum,
wherein:
- the preform (1) comprises a wall (120) forming a hollow body, said wall (120) having, for the heating radiation and under electromagnetic radiation emitted perpendicular to said wall (120), transmittance within a transmittance range extending from 5% to 70%;
- a wall of the container (2) has, in the entire light spectrum within the range of 350 nm to 520 nm, transmittance of less than 5%, and preferably of less than 0.5%.

15. Method according to the preceding claim, **characterized in that** the preform (1) is defined according to any one of Claims 1 to 9.

16. Method according to either one of Claims 14 and 15, **characterized in that** the container (2) is defined according to either one of Claims 12 and 13.
